# EUROPEAN PATENT APPLICATION

(11) **EP 4 651 064 A1**
(43) Date of publication of application: **19.11.2025**
(21) Application number: 24814267.1
(22) Date of filing: 22.05.2024
(51) Int. Cl.: G06Q 30/0601

(54) **COMMODITY REVIEW CONTENT PROCESSING METHOD, AND ELECTRONIC DEVICE**

(30) Priority: 31.05.2023 CN 202310638276
(71) Applicant: Hangzhou Alibaba International Internet Industry Co., Ltd., Hangzhou, Zhejiang 310052 (CN)
(72) Inventor: ZHAO, Shengkai, Hangzhou, Zhejiang 311121 (CN)
(74) Representative: Wu, Ting
(86) International application number: PCT/CN2024/094681
(87) International publication number: WO 2024/245068

(57) **Abstract**

Embodiments of this application disclose a method for processing commodity comment content and an electronic device. The method includes: analyzing, by using a commodity category as a unit, user comment content corresponding to a plurality of commodities, to determine a correspondence between a commodity category and a decision-making factor label; obtaining, after a target user initiates a request for filling user comment content for a target commodity object, basic comment content inputted by the target user; and processing the basic comment content according to the decision-making factor label corresponding to a commodity category to which the target commodity belongs, to generate suggested comment text content, so as to publish user comment content for the target commodity according to the suggested comment text content. According to the embodiments of this application, quality of user comment content of a commodity in a system can be improved.

## Description

This application claims priority to Chinese Patent Application No. 202310638276.1, filed with the China National Intellectual Property Administration on May 31, 2023 and entitled "METHOD FOR PROCESSING COMMODITY COMMENT CONTENT AND ELECTRONIC DEVICE", which is incorporated herein by reference in its entirety.

### TECHNICAL FIELD

This application relates to the field of information processing technologies, and in particular, to a method for processing commodity comment content and an electronic device.

### BACKGROUND

In a commodity information service system, after a user purchases a specific commodity, the user may publish comment content on the commodity by using an entrance provided in the system, including user experience on the commodity. Such user comment content may provide references for other users. However, in practical applications, when the user publishes comment content for a purchased commodity, the user may, due to a limited written expression capability or unwillingness to spend excessive time contemplating how to express, only rate some mandatory scoring items (for example, a description consistency score, a merchant service score, and a logistics service score), while a comment body portion may be written extremely concisely. For example, content such as "good" or "good enough" is written, and it may be difficult to use such comment content to provide effective references for other users.

In some systems, to improve quality of user comment content, when a user fills in user comment content, some reference labels may be provided for the user according to a category to which a commodity belongs or the like. For example, for a food commodity, a specific reference label may include freshness, a mouth feel, packaging quality, and the like. The user may input structured comment content in a manner of selecting such a label. However, regarding how freshness of a specific commodity is, how the taste and flavor are, and the like, it still requires the use to contemplate how to express, resulting in a relatively low utilization probability in practice. In addition, even if the user performs expression by using such a reference label, specifically presented comment content is excessively mechanical and stereotyped because of a uniform format (for example, each label corresponds to one paragraph) and the like, and therefore is easy to be ignored by readers.

Therefore, how to improve quality of user comment content of a commodity in a system becomes a technical problem that needs to be resolved by a person skilled in the art.

### SUMMARY

This application provides a method for processing commodity comment content and an electronic device, so as to improve quality of user comment content of a commodity in a system.

This application provides the following solutions:
A method for processing commodity comment content includes:
analyzing, by using a commodity category as a unit, user comment content corresponding to a plurality of commodities, to determine a correspondence between a commodity category and a decision-making factor label; where the decision-making factor label includes: at least one text label belonging to a focus of attention of a user in a process in which the user makes a decision about commodities of a same commodity category;
obtaining, after a target user initiates a request for filling user comment content for a target commodity object, basic comment content inputted by the target user; and
processing the basic comment content according to the decision-making factor label corresponding to a commodity category to which the target commodity belongs, to generate suggested comment text content, so as to publish user comment content for the target commodity according to the suggested comment text content.

The analyzing user comment content corresponding to a plurality of commodities, to determine a correspondence between a commodity category and a decision-making factor label includes:
performing word segmentation processing on a plurality of pieces of user comment content collected under a same commodity category, and performing semantic recognition on obtained text labels; and
determining, after a plurality of text labels are clustered according to a semantic recognition result, at least one text label belonging to the focus of attention of the user in a same commodity category, and determining the at least one text label as a decision-making factor label when the user makes a decision about the commodity category.

The method further includes:
determining target tone or writing style information selected by the target user; and
the processing the basic comment content according to the decision-making factor label corresponding to a commodity category to which the target commodity belongs includes:
   processing the basic comment content according to the decision-making factor label corresponding to the commodity category to which the target commodity belongs, and the target tone or writing style information, to generate suggested comment content having a target tone or writing style.

The basic comment content includes basic comment text content and basic picture/video content; and
the processing the basic comment content according to the decision-making factor label corresponding to a commodity category to which the target commodity belongs includes:
performing model understanding processing on the basic picture/video content, to generate text expression content of the basic picture/video content; and
processing, according to the decision-making factor label corresponding to the commodity category to which the target commodity belongs, the basic comment text content and the text expression content generated based on the basic picture/video content, to generate the suggested comment text content.

The basic comment content includes basic comment text content and basic picture/video content; and
the method further includes:
optimizing, in response to a request for optimizing the basic picture/video content, the basic picture/video content according to the commodity category to which the target commodity belongs, so as to publish optimized picture/video content.

A method for processing commodity comment content includes:
obtaining, after a target user initiates a request for filling user comment content for a target commodity object, basic comment content inputted by the target user;
submitting the basic comment content to a server end, so that the server end processes the basic comment content according to a decision-making factor label corresponding to a commodity category to which the target commodity belongs, to generate suggested comment text content; where the decision-making factor label is determined by analyzing user comment content of a plurality of commodities associated with the commodity category, and the decision-making factor label includes: at least one text label belonging to a focus of attention of a user in a process in which the user makes a decision about commodities of a same commodity category; and
presenting the suggested comment text content, so as to publish user comment content for the target commodity according to the suggested comment text content.

A method for providing commodity information includes:
collecting and analyzing a plurality of pieces of user comment content corresponding to a commodity by using the commodity as a unit, to determine a decision-making factor label corresponding to the commodity; where the decision-making factor label includes: at least one text label belonging to a focus of attention of a user in a process in which the user makes a decision about a same commodity; and
generating user comment summary content for a target commodity according to a decision-making factor label corresponding to the target commodity and information about a target user in a process of providing information about the target commodity to the target user, so as to provide commodity comment summary content to the target user.

When user comment content is collected, a collection scope includes a current commodity information service system, another commodity information service system, and/or a social media system; and
the method further includes:
determining, for commodity comment content collected from different systems, whether the commodity comment content corresponds to a same commodity by analyzing images and/or text description information of corresponding commodities.

The method further includes:
determining a sentiment label corresponding to the decision-making factor label, so as to generate the commodity comment summary content with reference to the sentiment label.

The method further includes:
analyzing commodity comment content published by a plurality of publishers having a same/similar feature as/to the target user for the target commodity, to determine a decision-making factor label when the user having the same/similar feature makes a decision about the commodity; and
the generating user comment summary content for a target commodity according to a decision-making factor label corresponding to the target commodity and information about a target user includes:
   generating the user comment summary content for the target commodity according to the decision-making factor label corresponding to the target commodity and the decision-making factor label when the user having the same/similar feature makes a decision about the commodity, where the user comment summary content includes purchase suggestion information provided to the target user.

A method for providing commodity information includes:
obtaining user comment summary content about a target commodity in a process of providing information related to the target commodity to a target user, where the user comment summary content is generated according to a decision-making factor label corresponding to the target commodity and information about the target user, the decision-making factor label is determined by collecting and analyzing a plurality of pieces of user comment content corresponding to the target commodity, and the decision-making factor label includes: at least one text label belonging to a focus of attention of a user in a process in which the user makes a decision about a same commodity; and
outputting the user comment summary content.

A method for processing commodity comment content includes:
obtaining, after a target user initiates a request for filling user comment content for a target commodity object, basic comment content inputted by the target user in response to a request for assisting in processing comment content, where the basic comment content includes basic picture/video content; and
optimizing the basic picture/video content according to a category to which the target commodity belongs, so as to publish optimized picture/video content.

The optimizing the basic picture/video content includes:
performing, if the basic picture/video content includes a plurality of pictures, model understanding on the plurality of pictures, and adjusting a sequence of the plurality of pictures according to the commodity category to which the target commodity belongs.

The optimizing the basic picture/video content includes:
performing subject identification on the basic picture/video content, determining subject type information of an identified subject, and optimizing the identified subject according to the commodity category to which the target commodity belongs and optimization processing rule information of each subject type corresponding to the commodity category.

The optimizing the basic picture/video content includes:
performing speech recognition on speech content if the basic video content includes the speech content, converting the speech content into text content, and generating a subtitle file of the video content according to the text content, so as to add a subtitle to the basic video content; and
translating the text content into a plurality of languages, and separately generating subtitle files of corresponding languages, to provide subtitle information of corresponding languages to users of different language requirements in a multilingual scenario.

The optimizing the basic picture/video content includes:
generating an artificial intelligence (AI) face image by using an AI algorithm if the basic picture/video content includes a face image, so as to replace an original face image in the basic picture/video content for display.

The optimizing the basic picture/video content includes:
removing or blurring privacy information and a background included in the basic picture/video content, and/or cutting a meaningless segment in the video content.

An apparatus for processing commodity comment content includes:
a preprocessing unit, configured to analyze, by using a commodity category as a unit, user comment content corresponding to a plurality of commodities, to determine a correspondence between a commodity category and a decision-making factor label; where the decision-making factor label includes: at least one text label belonging to a focus of attention of a user in a process in which the user makes a decision about commodities of a same commodity category;
a basic comment content obtaining unit, configured to obtain, after a target user initiates a request for filling user comment content for a target commodity object, basic comment content inputted by the target user; and
a suggested comment content generation unit, configured to process the basic comment content according to the decision-making factor label corresponding to a commodity category to which the target commodity belongs, to generate suggested comment text content, so as to publish user comment content for the target commodity according to the suggested comment text content.

An apparatus for processing commodity comment content includes:
a basic comment content obtaining unit, configured to obtain, after a target user initiates a request for filling user comment content for a target commodity object, basic comment content inputted by the target user;
a basic comment content submission unit, configured to submit the basic comment content to a server end, so that the server end processes the basic comment content according to a decision-making factor label corresponding to a commodity category to which the target commodity belongs, to generate suggested comment text content; where the decision-making factor label is determined by analyzing user comment content of a plurality of commodities associated with the commodity category, and the decision-making factor label includes: at least one text label belonging to a focus of attention of a user in a process in which the user makes a decision about commodities of a same commodity category; and
a suggested comment text content presentation unit, configured to present the suggested comment text content, so as to publish user comment content for the target commodity according to the suggested comment text content.

An apparatus for providing commodity information includes:
a preprocessing unit, configured to collect and analyze a plurality of pieces of user comment content corresponding to a commodity by using the commodity as a unit, to determine a decision-making factor label corresponding to the commodity; where the decision-making factor label includes: at least one text label belonging to a focus of attention of a user in a process in which the user makes a decision about a same commodity; and
a commodity comment summary content generation unit, configured to generate user comment summary content for a target commodity according to a decision-making factor label corresponding to the target commodity and information about a target user in a process of providing information about the target commodity to the target user, so as to provide commodity comment summary content to the target user.

An apparatus for providing commodity information includes:
a user comment summary content obtaining unit, configured to obtain user comment summary content about a target commodity in a process of providing information related to the target commodity to a target user, where the user comment summary content is generated according to a decision-making factor label corresponding to the target commodity and information about the target user, the decision-making factor label is determined by collecting and analyzing a plurality of pieces of user comment content corresponding to the target commodity, and the decision-making factor label includes: at least one text label belonging to a focus of attention of a user in a process in which the user makes a decision about a same commodity; and
a user comment summary content outputting unit, configured to output the user comment summary content.

An apparatus for processing commodity comment content includes:
a basic comment content obtaining unit, configured to: obtain, after a target user initiates a request for filling user comment content for a target commodity object, basic comment content inputted by the target user in response to a request for assisting in processing comment content, where the basic comment content includes basic picture/video content; and
an optimization processing unit, configured to optimize the basic picture/video content according to a category to which the target commodity belongs, so as to publish optimized picture/video content.

A computer readable storage medium has a computer program stored thereon, and the program is executed by a processor to implement the steps of the method according to any one of the above implementations.

An electronic device includes:
one or more processors; and
a memory associated with the one or more processors, where the memory is configured to store program instructions, and the program instructions, when being read and executed by the one or more processors, performing the steps of the method according to any one of the above implementations.

According to specific embodiments provided in this application, this application discloses the following technical effects:
In embodiments of this application, user comment content of a commodity may be analyzed in advance by using a commodity category as a unit, to determine a decision-making factor label corresponding to a specific commodity category. Such a decision-making factor label may be a text label with which a user pays attention when the user makes a decision about a commodity of the specific commodity category. In this way, for a case in which the user needs to submit user comment content for a target commodity, after the user submits basic comment content, suggested comment body content may be generated according to the basic user comment content and the decision-making factor label corresponding to the specific commodity category. In this way, the basic comment content outputted by the user can be rewritten, the decision-making factor label corresponding to the specific commodity category can be fully used in a rewriting process, and the decision-making factor label is determined by performing information mining on the user comment content corresponding to the specific commodity category. Therefore, the suggested comment body content generated by an algorithm not only can be completer and more detailed, but also can express more text labels related to a focus of attention of the user during decision-making, so that the user comment content has more reference value in helping another user make a decision, that is, quality of the user comment content is improved.

Certainly, any product implementing this application does not need to achieve all the advantages described above at the same time.

### BRIEF DESCRIPTION OF THE DRAWINGS

To describe the technical solutions in embodiments of this application or the prior art more clearly, the following briefly describes the accompanying drawings used in descriptions of embodiments. It is clear that, the accompanying drawings described below show merely some embodiments of this application, and a person of ordinary skill in the art may still derive other drawings from these accompanying drawings without creative efforts.
FIG. 1 is a schematic diagram of a system architecture according to an embodiment of this application;
FIG. 2 is a flowchart of a first method according to an embodiment of this application;
FIG. 3 is a schematic diagram of a first interface according to an embodiment of this application;
FIG. 4 is a schematic diagram of a second interface according to an embodiment of this application;
FIG. 5 is a schematic diagram of a third interface according to an embodiment of this application;
FIG. 6 is a flowchart of a second method according to an embodiment of this application;
FIG. 7 is a flowchart of a third method according to an embodiment of this application;
FIG. 8 is a schematic diagram of a fourth interface according to an embodiment of this application;
FIG. 9 is a flowchart of a fourth method according to an embodiment of this application;
FIG. 10 is a flowchart of a fifth method according to an embodiment of this application;
FIG. 11 is a schematic diagram of a first apparatus according to an embodiment of this application;
FIG. 12 is a schematic diagram of a second apparatus according to an embodiment of this application;
FIG. 13 is a schematic diagram of a third apparatus according to an embodiment of this application;
FIG. 14 is a schematic diagram of a fourth apparatus according to an embodiment of this application;
FIG. 15 is a schematic diagram of a fifth apparatus according to an embodiment of this application; and
FIG. 16 is a schematic diagram of an electronic device according to an embodiment of this application.

### DETAILED DESCRIPTION

The technical solutions in embodiments of this application are clearly and completely described in the following with reference to the accompanying drawings in the embodiments of this application. Apparently, the described embodiments are merely some rather than all of the embodiments of this application. Based on embodiments of this application, all other embodiments obtained by a person of ordinary skill in the art fall within the protection scope of this application.

In embodiments of this application, to improve quality of commodity user comment content in a system, an artificial intelligence generated content (AIGC) technology may be applied to a scenario that helps a user process and rewrite commodity user comment content. That is, in embodiments of this application, if a user needs to publish comment content on a commodity, after the user briefly comments the commodity, a piece of more complete and more detailed text content may be generated in an AIGC manner while keeping the original user idea. In this way, the user may publish user comment content based on the text content, so that specifically published user comment content has more reference value, that is, quality of the user comment content is improved.

When the AI model is used to help the user process or rewrite user comment content, text content expressed by using natural semantics needs to be generated, and the generated text content also needs to be close to an actual situation of a current commodity. That is, for different categories of commodities, when the user specifically writes comment content, the content may be different in terms of terms and the like. For example, a clothing category is usually commented by using "good looking", "soft material", "very comfortable", and the like. A food commodity is usually commented by using "good taste", "fresh date", and the like. Therefore, to achieve the foregoing objective, technologies such as an AI large-scale parameter model (AI large model for short) and big data mining may be used for implementation. The so-called AI large model refers to a model that uses a neural network model to perform pre-training on a large-scale data set including a huge data volume. Such a model usually has a strong model understanding capability for text information, image information, and the like, and further has a content production capability. Specifically, produced content may include a text, an image, a video, a voice, and the like. Because such an AI large model has a strong model understanding capability, the AI large model is applied to many fields. The big data mining technology mainly refers to mining needed information from a large-scale data set. In embodiments of this application, comment content about a commodity in a system or even in an entire network may be used as a data set, and needed information is mined from the data set, to help AI generation of user comment content.

Specifically, first, the user comment content may be collected, and then the collected user comment content is analyzed and processed by using a commodity category as a unit, to obtain a decision-making factor label when the user makes a decision about a specific commodity category. The so-called decision-making factor label may be specifically at least one text label belonging to a focus of attention of a user in a process in which the user makes a decision about commodities of a same commodity category, and is also a text label frequently used when the user comments on commodities of the commodity category. For example, for a commodity such as clothing, specific decision-making factor labels may include "good looking", "comfortable", and the like. Specifically, the decision-making factor label may be determined by analyzing a plurality of pieces of commodity comment content of a same commodity category. For example, in a manner, semantic label identification may be performed on a plurality of pieces of collected user comment content, and then, the semantic labels are clustered, to determine a plurality of semantic labels satisfying a user attention condition in a same commodity category. In this way, the plurality of semantic labels may be stored as decision-making factor labels when the user makes a decision about the commodity category. After the decision-making factor label is obtained, specifically when the user needs to comment on a target commodity, suggested comment text content that is specifically expressed by using a natural language may be generated according to basic comment content inputted by the user and the decision-making factor label. In this way, the user can comment on a specific commodity based on such AI-generated suggested comment text content.

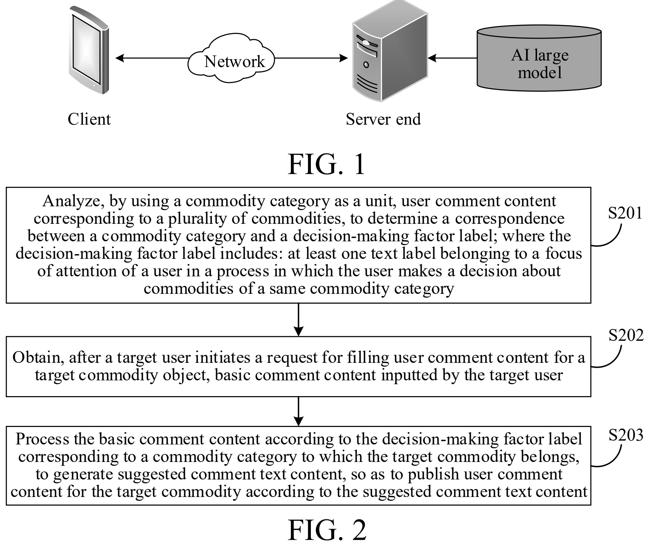

From a perspective of a system architecture, in embodiments of this application, the foregoing functions may be provided in a commodity information service system. Specifically, referring to FIG. 1, a specific system may include a client and a server end. The client may exist in a form such as an application (App) or a page like Web or H5, and mainly runs on a terminal device of a user, including a mobile device such as a mobile phone. The server end mainly runs in a server, and may specifically include a cloud server, an independent server, or the like. The client is mainly configured to present a front-end page and interact with a user. The server end may provide a specific data service. In embodiments of this application, specifically, analysis of user comment content may be included, to obtain a correspondence between a commodity category and a decision-making factor label. In addition, an AI large model may be invoked, to generate text content and return the text content to the client for presentation; and so on.

The following describes in detail a specific implementation solution provided in embodiments of this application.

### Embodiment 1

First, Embodiment 1 provides a method for processing commodity comment content from a perspective of the server end. Referring to FIG. 2, the method may include:
S201: Analyze, by using a commodity category as a unit, user comment content corresponding to a plurality of commodities, to determine a correspondence between a commodity category and a decision-making factor label; where the decision-making factor label includes: at least one text label belonging to a focus of attention of a user in a process in which the user makes a decision about commodities of a same commodity category.

Specifically, in this embodiment of this application, user comment content of a plurality of commodities may be collected first. The user comment content may include text content and may further include a picture, video content, and the like. Then, the collected user comment content may be analyzed by using a commodity category as a unit, to separately determine main focuses of attention of the user when the user makes a decision about each commodity category. These focuses of attention may be expressed by using specific text labels, and such text labels corresponding to the focuses of attention of the user may be referred to as decision-making factor labels.

For example, for a clothing category, comment content information when the user comments on a plurality of different clothing commodities may be collected, and then the comment content may be analyzed to determine a main focus of attention of the user when purchasing the clothing commodities. Text labels corresponding to the focuses of attention include, for example, "good looking", "comfortable", and "good style". The text labels may be used as decision-making factor labels corresponding to the clothing category. Certainly, during specific implementation, a granularity about a specific commodity category may be determined according to an actual requirement. For example, the clothing category may further be subdivided into male clothing, female clothing, child clothing, and the like. The decision-making factor label may even be determined on a leaf category granularity, so that generated text content has higher quality.

Specifically, there may be a plurality of manners for analyzing the user comment content. For example, in one manner, word segmentation processing may be separately performed on a plurality of pieces of user comment content collected under a same commodity category, and semantic recognition is performed on obtained text labels. Then, after the plurality of text labels are clustered according to a semantic recognition result, at least one text label belonging to the focus of attention of the user in a same commodity category may be determined according to a distribution situation of the clustered text labels, and is determined as a decision-making factor label when the user makes a decision about the commodity category.

Specifically, the user comment content may specifically include text content, a picture, and video content. Word segmentation processing may be directly performed on the text content part. That is, a paragraph or a long sentence is segmented into a plurality of words or phrases, which may be used as text labels after some modal particles or the like are removed. For a picture, a video, or the like, model understanding of image content may be first implemented by using an AI algorithm, and information understood from the image may be converted into text content for expression. Further, word segmentation and the like may also be performed on the text content, to obtain a plurality of text labels. After the text labels are obtained, semantic analysis may be separately performed on the text labels, and after the plurality of text labels are clustered based on a semantic analysis result, at least one text label belonging to the focus of attention of the user in a same commodity category may be determined, and is determined as a decision-making factor label when the user makes a decision about the commodity category.

For example, after word segmentation processing is performed on a plurality of pieces of user comment content corresponding to a commodity category, obtained text labels include "good looking", "beautiful", "excessively beautiful", and the like. The text labels may be found to have same or similar semantics after semantic recognition. Therefore, the text labels may be clustered into one category, or one uniform text label may be generated for a same category of text labels for expression. For example, "good looking", "beautiful", "excessively beautiful" and the like may be uniformly referred to as "good looking". After the clustering is completed, whether a text label word of a specific category is the focus of attention of the user when the user makes a decision about the commodity category may be determined according to a quantity of times that the text label included in each category appears in the user comment content. For example, assuming that in a plurality of pieces of user comment content corresponding to a commodity category, text labels such as "good looking", "comfortable", and "good style" appear most frequently, these text labels are the focus of attention of the user when the user makes a decision about the commodity category, and therefore, may all be used as decision-making factor labels corresponding to the commodity category.

S202: Obtain, after a target user initiates a request for filling user comment content for a target commodity object, basic comment content inputted by the target user.

After the decision-making factor label corresponding to the specific commodity category is determined in the foregoing step, a correspondence between the specific commodity category and the decision-making factor label may be stored, so as to be used when suggested comment content is generated for the user by using AI.

Specifically, first, the user may initiate a request for filling user comment content for a target commodity (for example, specifically, an entry for filling user comment content for a specific order or commodity may be provided in a page such as an order list page). Then, a user comment content editing interface may be provided for the user. The user may input some basic comment content by using the interface, for example, basic comment text content, which may further include some image content such as pictures and videos (for example, a picture or a video photographed for a physical commodity after the user receives the physical commodity; and a wearing image of the user may further be included for a commodity such as clothing).

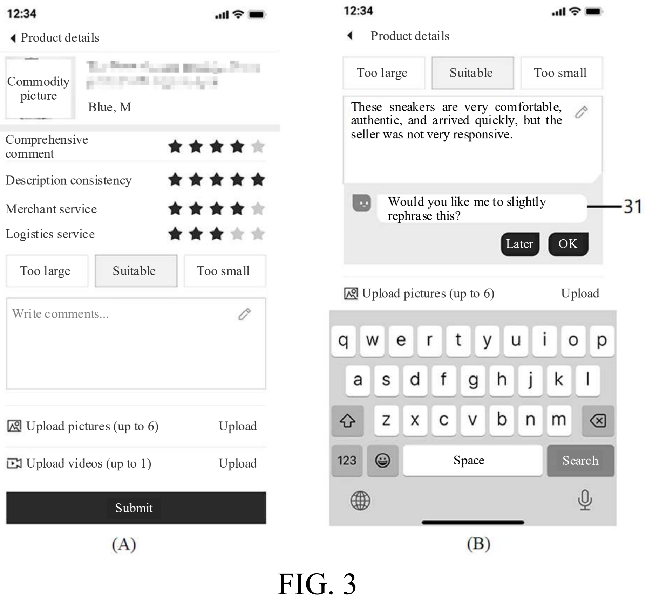

For example, as shown in (A) of FIG. 3, in such a user comment content editing interface, some scoring items may be provided for the user to score. For example, specific scoring items may include several aspects such as comprehensive comment, description consistency (that is, whether a physical commodity is consistent with information described on a commodity detail page, or a degree to which the physical commodity is consistent with the information described on the commodity detail page), merchant service (which generally may refer to a delivery speed of a merchant, or the like), and logistics service (which generally may refer to distribution efficiency of logistics, or the like). The user may score according to an actual experience result. For example, a plurality of score levels may be specifically provided for each scoring item. The user may select a score level to be given for a specific scoring item. A higher score level obtained by a scoring item indicates a higher score, and higher satisfaction of the user with the scoring item. In addition, in the editing interface, an input box used for inputting the comment body content may be further provided for the user. In addition to scoring the scoring item, the user may further input specific comment body content. For example, in the example shown in (B) of FIG. 3, the user purchases a pair of shoes, and specifically inputted comment body content may include: "These sneakers are very comfortable, authentic, and arrived quickly, but the seller was not very responsive.", and the like. In addition, operation options such as "upload a picture" and "upload a video" may also be provided, so that the user can upload comment content of a picture or a video type. In addition, in the foregoing editing interface, an option for providing "comprehensive comment" may further be provided for the user. With this option, the user may provide options for expressing a sentiment type, such as "positive," "neutral," or "negative", to a specific commodity object, and the user may make a selection using the option. Therefore, such information about the sentiment type also belongs to basic comment content of the user.

After the basic comment content is received, an AI large model and the like may help generate a paragraph of text content according to the basic comment content inputted by the user. That is, after the user scores only some scoring items, the AI large model may help generate a paragraph of text content, to be used as comment body content or reference. Alternatively, after some comment body content is simply filled in, rewriting is performed with the help of the AI large model, so that actually published comment body content is more abundant and can bring more reference value to other users, and does not occupy too much time of the user.

Certainly, during specific implementation, to avoid interference to a process in which the user actually inputs the user comment content, the foregoing process of generating target text content may be performed after a confirmation operation of the user is received. That is, an operation option for querying the user may be provided in the foregoing editing interface. For example, as shown at 31 in (B) of FIG. 3, dialog content of "Would you like me to slightly rephrase this?" may be provided in the editing interface, and options such as "later" and "OK" may be provided. If the user selects "OK", it represents that the user confirms that the AI large model is required to help to perform rewriting, and then a step of generating target text content may be triggered to be entered.

In the foregoing manner, the user may first enter the comment content editing interface through a "comment" entry provided for a specific order/commodity object on a page such as an order list, provide some basic comment content, and then initiate, by using an operation option in the comment content editing interface, a request for AI to assist in generating comment content. Alternatively, in another manner, to further improve efficiency, an operation option for expressing a sentiment type, such as "positive" or "negative", may be directly provided while a "comment" entry is provided on a page such as an order list page, or an operation option for scoring a scoring item may be directly provided. In this way, the user may directly make simple basic comment by using the operation option, and trigger AI to assist in generating comment content, and does not need to enter the comment content editing interface to perform triggering. In this way, the user can more efficiently obtain user comment content generated with the assistance of AI, and the like.

S203: Process the basic comment content according to the decision-making factor label corresponding to a commodity category to which the target commodity belongs, to generate suggested comment text content, so as to publish user comment content for the target commodity according to the suggested comment text content.

After the basic comment content provided by the user is obtained, the basic comment content may be processed according to the decision-making factor label corresponding to the commodity category to which the target commodity belongs, to generate suggested comment text content expressed by using a natural language.

That is, in this embodiment of this application, specifically, a target algorithm model (such as the AI large model, where the AI large model is mainly used as an example in this specification for description) may be used to generate suggested comment body content for the user. Information input into the AI large model may include basic comment content inputted by the user, and may further include decision-making factor label information corresponding to a commodity category to which a current specific target commodity belongs. In this way, the AI large model may generate, based on the information in the foregoing two aspects, a paragraph of suggested comment text content that is continuously expressed by using a natural language.

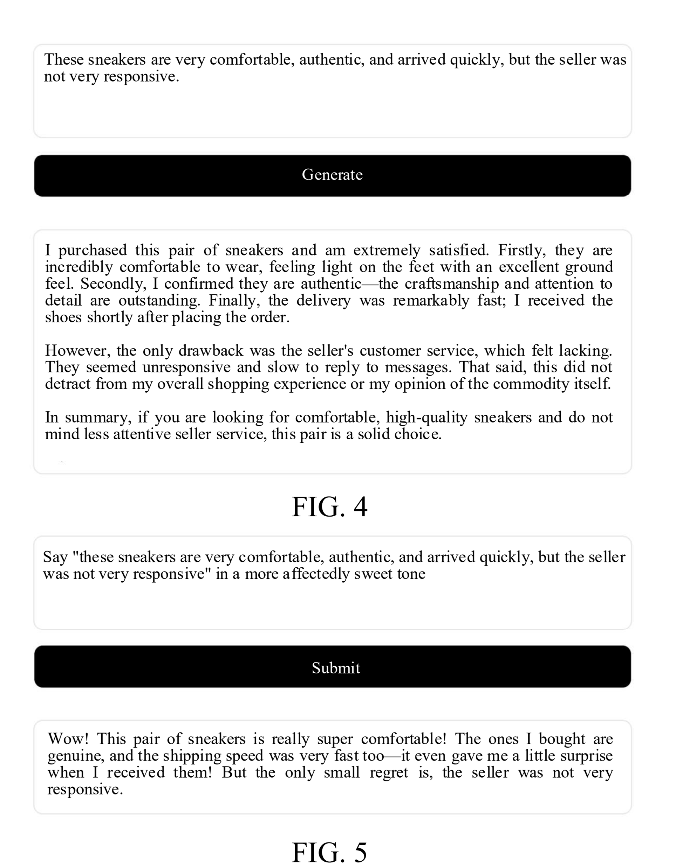

For example, in the example shown in FIG. 3, the user purchases a pair of sneakers, and the basic comment text content inputted by the user is: "These sneakers are very comfortable, authentic, and arrived quickly, but the seller was not very responsive". In addition, decision-making factor labels corresponding to the category "sneaker" include: "comfortable", "lightweight", "good feel", and the like. Then, after the information in the foregoing two aspects is input to the AI large model, more complete and richer expressions can be generated by using the AI large model. For example, as shown in FIG. 4, suggested comment content generated by the AI may be:
"I purchased this pair of sneakers and am extremely satisfied. Firstly, they are incredibly comfortable to wear, feeling light on the feet with an excellent ground feel. Secondly, I confirmed they are authentic-the craftsmanship and attention to detail are outstanding. Finally, the delivery was remarkably fast; I received the shoes shortly after placing the order. However, the only drawback was the seller's customer service, which felt lacking. They seemed unresponsive and slow to reply to messages. That said, this did not detract from my overall shopping experience or my opinion of the commodity itself. In summary, if you are looking for comfortable, high-quality sneakers and do not mind less attentive seller service, this pair is a solid choice".

It can be learned that with the large AI model, a specific text can be polished or expressed in a more enriched and more coherent manner, based on fully understanding the basic comment content outputted by the user. For example, specifically, relatively concise basic comment content inputted by the user may be analyzed to determine whether the user is generally satisfied with the commodity, the reasons for satisfaction or dissatisfaction, aspects thereof, and the like. Then, a text generation capability of the large AI model is used to generate text content that is smoothly expressed by using a natural language. In this period, term richness and the like in the text content can be improved based on a decision-making factor label corresponding to a specific commodity category. For example, in the foregoing example, in the basic comment content inputted by the user, it may be analyzed that the user is very satisfied with the purchased commodity. The reasons include three aspects, which are respectively "comfortable", "authentic", and "fast logistics". Therefore, when generating the suggested comment text content, the AI may express the suggested comment text content in three aspects. During this period, content of decision-making factor labels that belong to the category of "sneakers" such as "lightweight" and "good feeling" may be inserted. In addition, when AI generates the text content, for content such as "but the seller was not very responsive" expressed by the user in the basic comment content, the content may also be expressed by using an adversative mood or the like. Finally, summary-natured or suggestive-conclusion-natured content may also be provided, to make the expression more complete and have more reference value for other users, and so on.

It should be noted that in the foregoing process of rewriting the comment body content based on the basic comment content inputted by the user, the specific basic comment content inputted by the user may include basic comment text content, and may further include basic picture/video content. In this case, model understanding processing may also be performed on the basic picture/video content, to generate text expression content of the basic picture/video content. Then, the basic comment text content and the text expression content generated based on the basic picture/video content may be processed according to the decision-making factor label corresponding to the commodity category to which the target commodity belongs, so as to generate the suggested comment text content that is expressed by using a natural language. That is, related text content may further be identified or mined from content such as a picture and a video uploaded by the user. For example, for a clothing commodity, the user uploads a wearing effect image of the user. Although descriptions such as "fit well" are not mentioned when the basic comment text content is inputted, but this point can be reflected from the picture. Then, when text content is generated by using AI, it can also reflect descriptions related to "fit well" and the like.

In addition, during specific implementation, personalized customization of tone or writing style may also be provided. That is, for a same target commodity, for same basic comment content, different suggested comment text content corresponding to different tones and writing style may be selected to be generated. Specifically, optional tone, writing style, and other options may be provided for the user, and the user selects a specific tone, writing style, and the like. Alternatively, in another manner, an entry for the user to have a dialog with AI may be provided, so that the user may impose a requirement to AI in a dialog manner. For example, after the suggested comment body content generated by AI is presented, the user may input, via a keyboard or voice input, the following: Say "these sneakers are very comfortable, authentic, and arrived quickly, but the seller was not very responsive" in a more affectedly sweet tone. Then, the AI model may process the basic comment content according to the decision-making factor label corresponding to the commodity category to which the target commodity belongs, and the target tone or writing style information, to generate the suggested comment content that is expressed by using a natural language and has the target tone or writing style. That is, information input into the AI large model may further include information such as a tone and a writing style in addition to the foregoing basic comment content and decision-making factor label. For example, as shown in FIG. 5, for the foregoing example, text content of "more affectedly sweet tone" generated by AI may be:
"Wow! This pair of sneakers is really super comfortable! The ones I bought are genuine, and the shipping speed was very fast too-it even gave me a little surprise when I received them! But the only small regret is, the seller was not very responsive."

In conclusion, in this manner, the user can customize a personalized tone, writing style, and the like of comment content according to a preference of the user.

After the foregoing suggested comment text content is generated by using the AI large model, the suggested comment text content may be presented by using the foregoing comment content editing interface. In addition, options such as "refresh" and "use it" may further be provided for the user. If the user is unsatisfied with the currently generated suggested comment text content, the user may select "refresh". In this case, the AI model may regenerate text content. If "use it" is selected, the text content generated by AI may be presented in an input box used for inputting comment body content, and the comment body content that has been input by the user previously is replaced, so as to determine the comment body content according to the text content generated by AI and publish the comment body content. Certainly, the user may further perform processing such as some editing on the text content generated by AI by using the input box, and then submit and publish the text content.

In addition, during specific implementation, this embodiment of this application not only can help the user to rewrite input text comment content, but also can help the user to optimize uploaded content such as a picture or a video. That is, during specific implementation, after the user uploads the picture/video content for commenting on the target commodity, if a request for optimizing the basic picture/video content is received, the basic picture/video content may be optimized according to the commodity category to which the target commodity belongs, so as to publish optimized picture/video content.

That is, the picture/video content may be specifically optimized according to specific commodity category information. Different commodity category information may correspond to different optimization processing rules. Specifically, an optimization process on a picture/video may include the following several aspects:
1. A plurality of pictures are re-arranged, so that a picture that is more beneficial to reflecting a specific category of commodity feature is more preferentially presented. For example, for a clothing category of commodity, a wearing effect picture with a person may be preferentially arranged in front.
2. Subject identification is performed on the image/video content, a subject type and specific commodity category information are identified, and an identified subject is processed. For example, an identified subject of a commodity category may be highlighted, and for an identified subject of a person type, a specific processing manner of a person type subject may be different for a different commodity category. For example, if the subject is a clothing commodity, a person in a picture or a video is usually to display a wearing effect of the clothing, and therefore, the subject of the person type may be highlighted or magnified. However, for a digital commodity or the like, a person category subject appearing in an image or a video usually does not help to present a commodity feature. Therefore, blurring processing and the like may be performed. A subject processing manner corresponding to a specific commodity category may be input into the AI model as information such as rule information, so that after a subject and a type in an image or a video are identified, processing may be performed according to a processing rule information corresponding to the specific commodity category.
3. If the video content uploaded by the user includes voice content, voice recognition may further be performed on the voice content, the voice content is converted into text content, and a subtitle file of the video content is generated according to the text content, so as to add a subtitle to the basic video content. In a multilingual scenario, the text content obtained by specifically performing speech recognition may further be translated into a plurality of languages, and subtitle files of corresponding languages are separately generated, to provide subtitle information of corresponding languages to users of different language requirements in the multilingual scenario.
4. In some cases, the user may be willing to upload a picture of trying clothes on the user, but may not want another user to see the user's face. In the existing technology, the user usually needs to use some props to block a face part during photographing, add mosaic to the face part after photographing, or the like. However, this case affects completeness of a picture presentation effect. In view of this case, in this embodiment of this application, if the image/video content uploaded by the user includes a face image, an AI face image may further be generated by using the AI algorithm, to replace the original face image in the image/video content uploaded by the user for display. That is, a real face image may be replaced with an AI face image, to protect user privacy and the like.
5. In addition, the picture or the video uploaded by the user may further include some private information such as a phone number (for example, a photographing background includes phone number information, which may be photographed into the picture or the video), or the photographing background may be disordered, so as to affect presentation of a commodity. Therefore, specifically, during optimization processing, privacy information and the background included in the picture/video content uploaded by the user may further be removed or blurred. In addition, the video uploaded by the user may further include some meaningless content. Therefore, when optimization processing is performed, meaningless segments in the video content may further be identified and cut. That is, the meaningless segments may be removed, to improve video quality and avoid occupation of system resources and the like by meaningless video content.

A plurality of optimization processing manners of picture/video content are described above, and in actual application, other optimization processing manners may further be included, which are not listed one by one herein. It should be noted that during specific implementation, aspects of specifically processing the picture/video uploaded by the user may be determined by using the AI algorithm. Alternatively, in another manner, a plurality of optional optimization processing solutions may be provided for the user, to be selected by the user for use according to an actual situation. Correspondingly, the AI algorithm may perform optimization processing according to an optimization processing solution selected by the user. For example, some users may not need to replace a face image, and may not need to select the option when selecting the optimization processing solution.

In conclusion, in embodiments of this application, user comment content of a commodity may be analyzed in advance by using a commodity category as a unit, to determine a decision-making factor label corresponding to a specific commodity category. Such a decision-making factor label may be a text label with which a user pays attention when the user makes a decision about a commodity of the specific commodity category. In this way, for a case in which the user needs to submit user comment content for a target commodity, after the user submits basic comment content, suggested comment body content may be generated according to the basic user comment content and the decision-making factor label corresponding to the specific commodity category. In this way, the basic comment content outputted by the user can be rewritten, the decision-making factor label corresponding to the specific commodity category can be fully used in a rewriting process, and the decision-making factor label is determined by performing information mining on the user comment content corresponding to the specific commodity category. Therefore, the suggested comment body content generated by an algorithm not only can be completer and more detailed, but also can express more text labels related to a focus of attention of the user during decision-making, so that the user comment content has more reference value in helping another user make a decision, that is, quality of the user comment content is improved.

### Embodiment 2

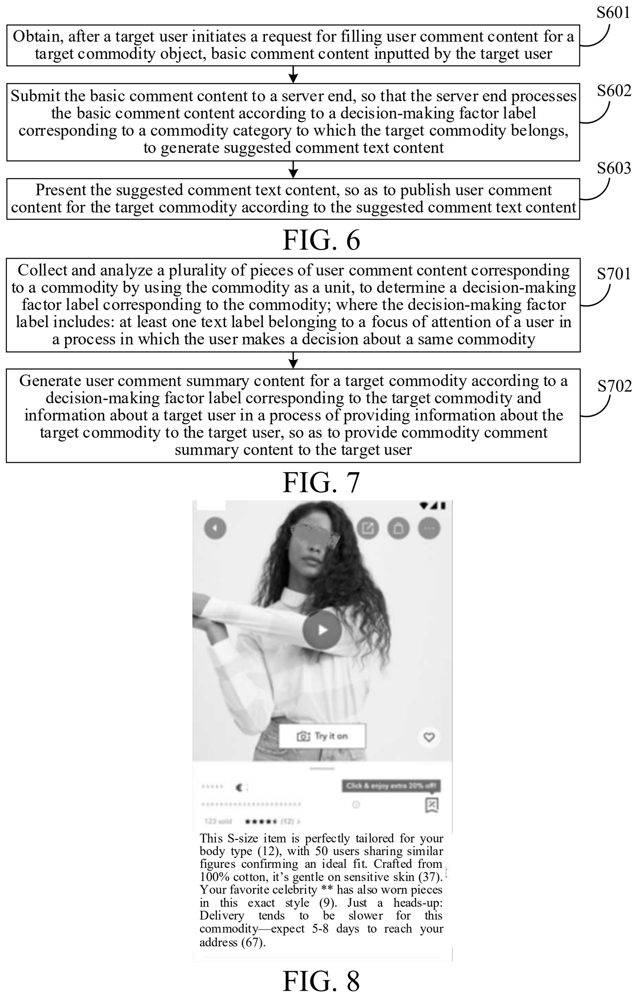

Embodiment 2 corresponds to Embodiment 1. From a perspective of a client, a method for processing commodity comment content is provided. Referring to FIG. 6, the method may include:
S601: Obtain, after a target user initiates a request for filling user comment content for a target commodity object, basic comment content inputted by the target user.
S602: Submit the basic comment content to a server end, so that the server end processes the basic comment content according to a decision-making factor label corresponding to a commodity category to which the target commodity belongs, to generate suggested comment text content; where the decision-making factor label is determined by analyzing user comment content of a plurality of commodities associated with the commodity category, and the decision-making factor label includes: at least one text label belonging to a focus of attention of a user in a process in which the user makes a decision about commodities of a same commodity category.
S603: Present the suggested comment text content, so as to publish user comment content for the target commodity according to the suggested comment text content.

### Embodiment 3

In Embodiment 1 and Embodiment 2, technologies such as an AI model and big data mining are mainly used to help a user to generate user comment content with more reference value when the user needs to submit user comment content for a target commodity. However, in Embodiment 3, the foregoing AI model and related technology of big data mining may further be applied to a scenario of helping a user quickly learn user comment content of a commodity.

Specifically, in an actual application, there may be many pieces of user comment content associated with one commodity. Especially for some hot commodities or commodities with relatively high sales, there may be more pieces of user comment content. In this case, the user may spend a long time for viewing. Therefore, the user may usually exit or close the commodity after viewing some pieces. This may cause a one-sided impression to the commodity because complete comment content is not viewed. Alternatively, some comment content that is truly useful to a current user may be ranked at a later position and not viewed by the user, resulting in failure to play a real role in helping the user make a shopping decision, and the like.

In view of this case, in this embodiment of this application, model understanding may be performed on a plurality of pieces of user comment content associated with a target commodity based on the foregoing AI large model, a plurality of pieces of target comment content may be summarized based on a model understanding result, and the AI large model generates target text content used for summarizing and performing summative expression on the plurality of pieces of user comment content. In addition, in a process of summarizing a plurality of pieces of user comment content, text content may further be generated according to decision-making factor label information corresponding to the foregoing specific commodity category, so that the generated text content can further represent a text label related to a focus of attention of the user during decision-making. For example, information about sentiment expressions such as a positive comment, a negative comment, or a neutral comment performed by the user on a commodity may be identified and summarized, or information such as features, advantages, and disadvantages of a commodity mentioned by the user in a comment may also be identified and summarized. Alternatively, common or similarity analysis may be performed on a plurality of pieces of user comment content, so as to perform classification and summary. In addition, general summary on aspects such as a matching relationship with a user preference may be performed according to a preference of a current target user or some basic attributes (including a crowd to which the user belongs).

In addition, in a process of generating the text content, feature information of the current user may further be considered, and user comment content published by a publisher having a same or similar feature to the current user is analyzed, so that generated text content can include content related to a purchase suggestion. For example, if a user has a pear-shaped body type, and among users having bought a current commodity, users also with a pear-shaped body type have left comments regarding body fit, generated text content can specifically highlight this aspect of information.

In addition, when user comment content of a same commodity is collected, in addition to user comment content of the commodity in a current commodity information service system, user comment content of the commodity in another commodity information service system about the commodity may also be collected, and user comment content related to the commodity and published in some social media systems may further be included. User comment content information collected by the foregoing plurality of systems may be combined, to produce a more complete summary of user comment content about the commodity for the user, so as to help the user understand a user comment situation of the commodity more comprehensively, thereby more accurately making a shopping decision.

In conclusion, in Embodiment 3 of this application, one or more pieces of summarized text content may be generated according to user comment content of a same commodity. Specific text content may be a continuous expression that conforms to natural language syntax, to facilitate understanding by the user. Further, the target text content is provided and presented to the user, so that the user can quickly browse user comment content by using the target text content. In addition, because the target text content is of a summarized nature, after the target text content is viewed, it is equivalent to that all user comment content is viewed, and a conclusion is drawn. In this way, the user can be helped to improve browsing efficiency of the user comment content, and more complete and more comprehensive understanding of the user comment content can be made, thereby better helping the user make a purchase decision.

Specifically, referring to FIG. 7, Embodiment 3 of this application provides a method for providing commodity information from a perspective of a server end. The method may specifically include:
S701: Collect and analyze a plurality of pieces of user comment content corresponding to a commodity by using the commodity as a unit, to determine a decision-making factor label corresponding to the commodity; where the decision-making factor label includes: at least one text label belonging to a focus of attention of a user in a process in which the user makes a decision about a same commodity.

Similar to Embodiment 1, specifically, when a decision-making factor label of a specific commodity is determined, segmentation processing may be performed on a plurality of pieces of user comment content corresponding to the same commodity, and semantic recognition is performed on a plurality of obtained text labels. Then, after the plurality of text labels are clustered according to a semantic recognition result, at least one text label belonging to a comment focus of attention of the user is determined, and is determined as a decision-making factor label when the user makes a decision about the commodity. For example, for a clothing commodity, when commenting on the commodity, most users use label words such as "good style" and "comfortable". In this case, it proves that most users purchase the commodity for the foregoing reason. Therefore, these label words may be used as decision-making factor labels of the commodity.

When user comment content is collected, a specific collection scope may include not only a current commodity information service system, but also another commodity information service system, or even some social media systems. In this way, richer user comment content about a same commodity can be obtained through cross-platform information collection. It should be noted herein that in a specific commodity information system, to mark a same commodity, generally, an identifier such as a commodity ID may be added to the commodity, and a same ID corresponds to a same commodity, to identify the same commodity. However, different systems mark commodities in different manners. Therefore, whether the commodities in the different systems are the same commodity cannot be determined by using a commodity ID manner. In this case, images and/or text description information of the corresponding commodities may be analyzed to determine whether the information corresponds to the same commodity, and then user comment content that is about the same commodity and that is collected in the different systems is analyzed and processed.

It should be noted that during specific implementation, in a process of determining a decision-making factor label for a specific commodity, a corresponding sentiment label may further be determined, so as to more accurately summarize user comment content of the commodity according to the sentiment label. The sentiment label may include positive, negative, or neutral. During specific implementation, based on that word segmentation processing is performed on user comment content, to obtain a plurality of text labels and semantic analysis is performed, a sentiment score (which may be specifically expressed by using a sentiment vector, or the like) is further scored for a specific text label by using a specific algorithm, and then, it is determined, according to a preset threshold, whether the specific text label belongs to positive, negative, neutral comment, or the like. In this manner, it may be convenient to count quantities and distribution situations of user comment content of various sentiment labels corresponding to a same commodity. For example, for a commodity, whether more positive comments or negative comments are obtained for the commodity may be determined.

S702: Generate user comment summary content for a target commodity according to a decision-making factor label corresponding to the target commodity and information about a target user in a process of providing information about the target commodity to the target user, so as to provide commodity comment summary content to the target user.

After the decision-making factor label of the commodity is obtained, the decision-making factor label may be used for generating user comment summary content about the commodity. Certainly, during specific implementation, during specific generation of user comment summary content of a same commodity, not only the foregoing decision-making factor label may be considered, but also personal information of the user may be considered. That is, in this embodiment of this application, user comment summary content of a same commodity may be generated in a personalized manner when information about a target commodity is provided for a specific user. That is, when different users browse a same commodity, specifically seen user comment summary content may be different.

There may be a plurality of cases of providing information about a target commodity to a target user. Correspondingly, the user comment summary content may be provided in a plurality of pages. For example, when a system recommends information related to the target commodity to the target user, user comment summary content about a specific commodity may be provided on a commodity recommendation information page. Alternatively, when the user initiates search, and a search result page needs to include information about the target commodity, brief user comment content about a specific commodity may be provided on the search result page. Alternatively, when the user initiates a browsing request for a commodity details page of a commodity, user comment summary content about the commodity may be provided on the commodity details page.

Specifically, to better implement personalized generation of the user comment summary content, commodity comment content published by a plurality of publishers having a same/similar feature as/to the target user for the target commodity may be analyzed, to determine a decision-making factor label when the user having the same/similar feature makes a decision about the commodity; and then, user comment summary content that is expressed by using a natural language may be generated for the target commodity according to the decision-making factor label corresponding to the target commodity and a decision-making factor label when the user with the same/similar feature makes a decision about the commodity. In this case, specific user comment summary content may include purchase suggestion information provided to the target user. The feature information about the user may include a figure feature, a preference feature, and the like of the user, and may be specifically obtained by using related data provided by the user, or from a historical behavior record of the user, or the like.

For example, referring to FIG. 8, for a commodity of a clothing category, specifically generated user comment summary content may include:
"This S-size item is perfectly tailored for your body type (12), with 50 users sharing similar figures confirming an ideal fit. Crafted from 100% cotton, it's gentle on sensitive skin (37). Your favorite celebrity ** has also worn pieces in this exact style (9). Just a heads-up: Delivery tends to be slower for this commodity-expect 5-8 days to reach your address (67)".

It can be learned that the foregoing user comment summary content is mainly generated around information about a current target user in a personalized manner. In a generation process, information such as a figure feature of a user, preference information such as a favored celebrity, and a common delivery address are considered, so that a shopping recommendation may be provided in aspects such as a size, and reference information in an aspect of logistics may also be provided. Certainly, during specific implementation, the feature information about the user may further include a plurality of types, for example, whether the user has some brand preferences. When the foregoing user comment summary content is generated, content in a conclusion form may further be specifically marked with a corresponding user comment quantity. For example, a number marked after each sentence in the foregoing example may represent a quantity of user comment content that also expresses the sentence.

During specific implementation, to satisfy a presentation requirement in a multilingual scenario, the user comment summary content may further be translated into a language needed by the target user, so as to provide the user comment summary content to the user based on the language, and so on.

In conclusion, a decision-making factor label in a process in which a user makes a decision about a specific commodity is determined based on a commodity granularity, and user comment content of a same commodity may be summarized with reference to personal feature information of the user, to generate personalized user comment summary content for a specific user, thereby more efficiently helping the user make a shopping decision.

### Embodiment 4

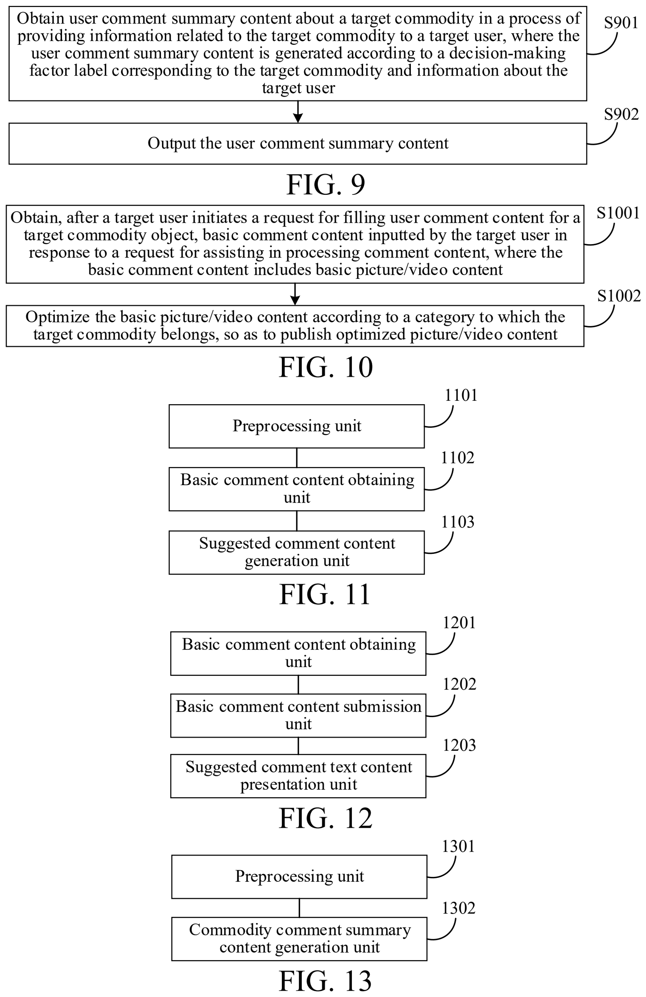

Embodiment 4 corresponds to Embodiment 3. From a perspective of a client, a method for providing commodity information is provided. Referring to FIG. 9, the method may include:
S901: Obtain user comment summary content about a target commodity in a process of providing information related to the target commodity to a target user, where the user comment summary content is generated according to a decision-making factor label corresponding to the target commodity and information about the target user, the decision-making factor label is determined by collecting and analyzing a plurality of pieces of user comment content corresponding to the target commodity, and the decision-making factor label includes: at least one text label belonging to a focus of attention of a user in a process in which the user makes a decision about a same commodity.

Specific user comment summary content may be generated by a server end and provided to the client.

S902: Output the user comment summary content.

Specifically, the client may output the user comment summary content in a plurality of manners. For example, if the user comment summary content may be text content, the content may be presented on a specific page. Alternatively, to satisfy requirements of a visually impaired group or a disordered group, the server end may further generate user comment summary content in a voice format. In this case, the client may play voice of the user comment summary content, and so on.

### Embodiment 5

In the foregoing Embodiment 1, optimization processing on content such as a picture or a video uploaded by a user in a process of submitting user comment content by the user is mentioned. Therefore, Embodiment 5 further provides a method for processing commodity comment content. Referring to FIG. 10, the method may include:
S1001: Obtain, after a target user initiates a request for filling user comment content for a target commodity object, basic comment content inputted by the target user in response to a request for assisting in processing comment content, where the basic comment content includes basic picture/video content.
S1002: Optimize the basic picture/video content according to a category to which the target commodity belongs, so as to publish optimized picture/video content.

Specifically, there may be a plurality of aspects for optimizing the basic picture/video content. For example, if the basic picture/video content includes a plurality of pictures, model understanding is performed on the plurality of pictures, and a sequence of the plurality of pictures is adjusted according to the commodity category to which the target commodity belongs.

Alternatively, subject identification may be performed on the basic picture/video content, subject type information of an identified subject may be determined, and the identified subject may be optimized according to the commodity category to which the target commodity belongs and optimization processing rule information of each subject type corresponding to the commodity category.

Alternatively, speech recognition may be performed on speech content if the basic video content includes the speech content, the speech content may be converted into text content, and a subtitle file of the video content may be generated according to the text content, so as to add a subtitle to the basic video content. During specific implementation, the text content may further be translated into a plurality of languages, and subtitle files of corresponding languages may be separately generated, to provide subtitle information of corresponding languages to users of different language requirements in a multilingual scenario.

Alternatively, an artificial intelligence (AI) face image may be generated by using an AI algorithm if the basic picture/video content includes a face image, so as to replace an original face image in the basic picture/video content for display.

Alternatively, privacy information and a background included in the basic picture/video content may be removed or blurred, and/or a meaningless segment in the video content may be cut.

For parts that are not described in detail in Embodiment 2 to Embodiment 5, refer to descriptions in Embodiment 1 and other parts of this specification, and details are not described herein again.

It should be noted that in this embodiment of this application, use of user data may be involved. In actual application, in a case in which the user data meets a requirement of an applicable law and regulation of a country (for example, the user explicitly agrees to notify the user of a requirement, and the like), the user-specific personal data may be used in the solution described in this specification within the scope of the applicable law and regulation.

Corresponding to Embodiment 1, an embodiment of this application further provides an apparatus for processing commodity comment content. Referring to FIG. 11, the apparatus may include:
a preprocessing unit 1101, configured to analyze, by using a commodity category as a unit, user comment content corresponding to a plurality of commodities, to determine a correspondence between a commodity category and a decision-making factor label; where the decision-making factor label includes: at least one text label belonging to a focus of attention of a user in a process in which the user makes a decision about commodities of a same commodity category;
a basic comment content obtaining unit 1102, configured to obtain, after a target user initiates a request for filling user comment content for a target commodity object, basic comment content inputted by the target user; and
a suggested comment content generation unit 1103, configured to process the basic comment content according to the decision-making factor label corresponding to a commodity category to which the target commodity belongs, to generate suggested comment text content, so as to publish user comment content for the target commodity according to the suggested comment text content.

The specific preprocessing unit may be specifically configured to:
perform word segmentation processing on a plurality of pieces of user comment content collected under a same commodity category, and perform semantic recognition on obtained text labels; and
determine, after a plurality of text labels are clustered according to a semantic recognition result, at least one text label belonging to the focus of attention of the user in a same commodity category, and determine the at least one text label as a decision-making factor label when the user makes a decision about the commodity category.

In addition, the apparatus may further include:
a target tone or writing style information determining unit, configured to determine target tone or writing style information selected by the target user; and
the suggested comment content generation unit may be specifically configured to:
   process the basic comment content according to the decision-making factor label corresponding to the commodity category to which the target commodity belongs, and the target tone or writing style information, to generate suggested comment content having a target tone or writing style.

The basic comment content includes basic comment text content and basic picture/video content; and
the suggested comment content generation unit may be specifically configured to:
perform model understanding processing on the basic picture/video content, to generate text expression content of the basic picture/video content; and
process, according to the decision-making factor label corresponding to the commodity category to which the target commodity belongs, the basic comment text content and the text expression content generated based on the basic picture/video content, to generate the suggested comment text content.

In addition, if the basic comment content includes basic comment text content and basic picture/video content, the apparatus may further include:
a picture/video optimization processing unit, configured to: optimize, in response to a request for optimizing the basic picture/video content, the basic picture/video content according to the commodity category to which the target commodity belongs, so as to publish optimized picture/video content.

Corresponding to Embodiment 2, an embodiment of this application further provides an apparatus for processing commodity comment content. Referring to FIG. 12, the apparatus may include:
a basic comment content obtaining unit 1201, configured to obtain, after a target user initiates a request for filling user comment content for a target commodity object, basic comment content inputted by the target user;
a basic comment content submission unit 1202, configured to submit the basic comment content to a server end, so that the server end processes the basic comment content according to a decision-making factor label corresponding to a commodity category to which the target commodity belongs, to generate suggested comment text content; where the decision-making factor label is determined by analyzing user comment content of a plurality of commodities associated with the commodity category, and the decision-making factor label includes: at least one text label belonging to a focus of attention of a user in a process in which the user makes a decision about commodities of a same commodity category; and
a suggested comment text content presentation unit 1203, configured to present the suggested comment text content, so as to publish user comment content for the target commodity according to the suggested comment text content.

Corresponding to Embodiment 3, an embodiment of this application further provides an apparatus for providing commodity information. Referring to FIG. 13, the apparatus may include:
a preprocessing unit 1301, configured to collect and analyze a plurality of pieces of user comment content corresponding to a commodity by using the commodity as a unit, to determine a decision-making factor label corresponding to the commodity; where the decision-making factor label includes: at least one text label belonging to a focus of attention of a user in a process in which the user makes a decision about a same commodity; and
a commodity comment summary content generation unit 1302, configured to generate user comment summary content for a target commodity according to a decision-making factor label corresponding to the target commodity and information about a target user in a process of providing information about the target commodity to the target user, so as to provide commodity comment summary content to the target user.

The preprocessing unit may be specifically configured to:
perform word segmentation processing on a plurality of pieces of user comment content corresponding to a same commodity, and perform semantic recognition on a plurality of obtained text labels; and
after the plurality of text labels are clustered according to a semantic recognition result, determine at least one text label belonging to a comment focus of attention of the user, and determine same as a decision-making factor label when the user makes a decision about the commodity.

When user comment content is collected, a collection scope includes a current commodity information service system, another commodity information service system, and/or a social media system; and
in this case, the apparatus may further include:
a same-commodity identification unit, configured to determine, for commodity comment content collected from different systems, whether the commodity comment content corresponds to a same commodity by analyzing images and/or text description information of corresponding commodities.

In addition, the apparatus may further include:
a sentiment label determining unit, configured to determine a sentiment label corresponding to the decision-making factor label, so as to generate the commodity comment summary content with reference to the sentiment label.

In addition, the apparatus may further include:
a label determining unit, configured to analyze commodity comment content published by a plurality of publishers having a same/similar feature as/to the target user for the target commodity, to determine a decision-making factor label when the user having the same/similar feature makes a decision about the commodity; and
the commodity comment summary content generation unit may be specifically configured to:
   generate the user comment summary content for the target commodity according to the decision-making factor label corresponding to the target commodity and the decision-making factor label when the user having the same/similar feature makes a decision about the commodity, where the user comment summary content includes purchase suggestion information provided to the target user.

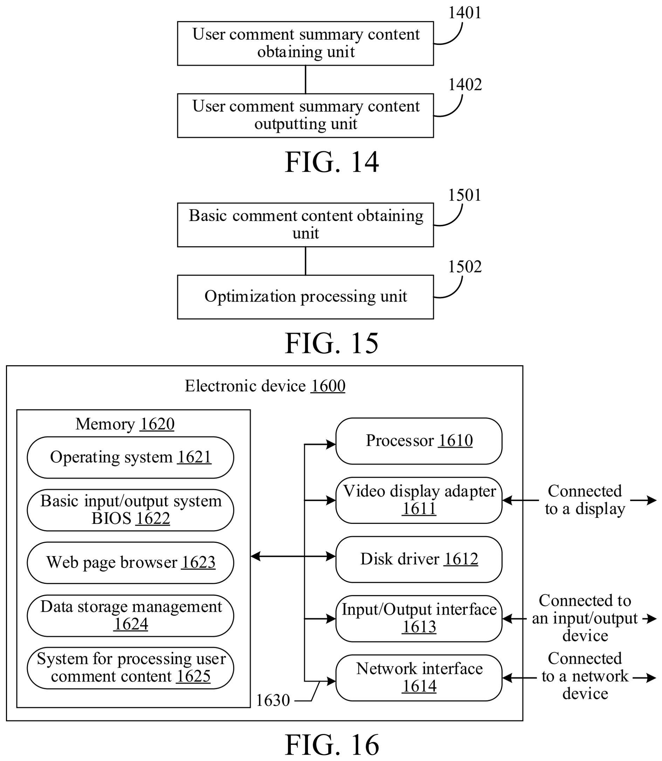

Corresponding to Embodiment 4, an embodiment of this application further provides an apparatus for providing commodity information. Referring to FIG. 14, the apparatus may include:
a user comment summary content obtaining unit 1401, configured to obtain user comment summary content about a target commodity in a process of providing information related to the target commodity to a target user, where the user comment summary content is generated according to a decision-making factor label corresponding to the target commodity and information about the target user, the decision-making factor label is determined by collecting and analyzing a plurality of pieces of user comment content corresponding to the target commodity, and the decision-making factor label includes: at least one text label belonging to a focus of attention of a user in a process in which the user makes a decision about a same commodity; and
a user comment summary content outputting unit 1402, configured to output the user comment summary content.

Corresponding to Embodiment 5, an embodiment of this application further provides an apparatus for processing commodity comment content. Referring to FIG. 15, the apparatus may include:
a basic comment content obtaining unit 1501, configured to: obtain, after a target user initiates a request for filling user comment content for a target commodity object, basic comment content inputted by the target user in response to a request for assisting in processing comment content, where the basic comment content includes basic picture/video content; and
an optimization processing unit 1502, configured to optimize the basic picture/video content according to a category to which the target commodity belongs, so as to publish optimized picture/video content.

Specifically, the optimization processing unit may be specifically configured to:
perform, if the basic picture/video content includes a plurality of pictures, model understanding on the plurality of pictures, and adjust a sequence of the plurality of pictures according to the commodity category to which the target commodity belongs; or
perform subject identification on the basic picture/video content, determine subject type information of an identified subject, and optimize the identified subject according to the commodity category to which the target commodity belongs and optimization processing rule information of each subject type corresponding to the commodity category; or
perform speech recognition on speech content if the basic video content includes the speech content, convert the speech content into text content, and generate a subtitle file of the video content according to the text content, so as to add a subtitle to the basic video content; and
translate the text content into a plurality of languages, and separately generate subtitle files of corresponding languages, to provide subtitle information of corresponding languages to users of different language requirements in a multilingual scenario; or
generate an artificial intelligence (AI) face image by using an AI algorithm if the basic picture/video content includes a face image, so as to replace an original face image in the basic picture/video content for display; or
remove or blur privacy information and a background included in the basic picture/video content, and/or cut a meaningless segment in the video content.

In addition, an embodiment of this application further provides: a computer readable storage medium, having a computer program stored thereon, and when being executed by a processor, the program implements the steps of the method in any one of the foregoing method embodiments; and
an electronic device, including:
one or more processors; and
a memory associated with the one or more processors, where the memory is configured to store program instructions, and the program instructions, when being read and executed by the one or more processors, performing the steps of the method according to any one of the foregoing method embodiments.

FIG. 16 exemplarily shows an architecture of an electronic device, which may specifically include a processor 1610, a video display adapter 1611, a disk driver 1612, an input/output interface 1613, a network interface 1614, and a memory 1620. The processor 1610, the video display adapter 1611, the disk driver 1612, the input/output interface 1613, and the network interface 1614 may be in a communication connection with the memory 1620 by using a communication bus 1630.

The processor 1610 may be implemented by using a general-purpose central processing unit (CPU), a microprocessor, an application-specific integrated circuit (ASIC), one or more integrated circuits, or the like, and is configured to execute a related program, so as to implement the technical solution provided in this application.

The memory 1620 may be implemented in a form of a read-only memory (ROM), a random access memory (RAM), a static storage device, or a dynamic storage device. The memory 1620 may store an operating system 1621 configured to control running of the electronic device 1600, and a basic input/output system (BIOS) configured to control a low-level operation of the electronic device 1600. In addition, a web page browser 1623, a data storage management system 1624, a commodity comment content processing system 1625, and the like may further be stored. The commodity comment content processing system 1625 may be an application program that specifically implements operations of the foregoing steps in embodiments of this application. In conclusion, when the technical solution provided in this application is implemented by using software or firmware, related program code is stored in the memory 1620, and is invoked and executed by the processor 1610.

The input/output interface 1613 is used to connect an input/output module to implement information input and output. The input/output module may be configured in the device (not shown in the figure) as a component, or may be externally connected to the device to provide corresponding functions. The input device may include a keyboard, a mouse, a touch screen, a microphone, various sensors, and the like, and the output device may include a display, a speaker, a vibrator, an indicator light, and the like.

The network interface 1614 is configured to connect to a communication module (not shown in the figure) to implement communication and interaction between the device and another device. The communication module may implement communication in a wired manner (such as USB and a network cable), or may implement communication in a wireless manner (such as a mobile network, Wi-Fi, and Bluetooth).

The bus 1630 includes a channel for transmitting information between components of the device (for example, the processor 1610, the video display adapter 1611, the disk driver 1612, the input/output interface 1613, the network interface 1614, and the memory 1620).

It should be noted that although the foregoing device only shows the processor 1610, the video display adapter 1611, the disk driver 1612, the input/output interface 1613, the network interface 1614, the memory 1620, the bus 1630, and the like, in a specific implementation process, the device may further include another component required for implementing normal operation. In addition, a person skilled in the art may understand that the foregoing device may include only components required for implementing the solutions of this application, and does not need to include all the components shown in the figure.

It may be learned from the foregoing description of the implementations that a person skilled in the art may clearly understand that this application may be implemented by using software plus a required universal hardware platform. Based on such an understanding, the technical solutions of this application essentially or the part contributing to the prior art may be implemented in a form of a software product. The computer software product may be stored in a storage medium, such as a ROM/RAM, a magnetic disk, or an optical disc, and includes several instructions for instructing a computer device (which may be a personal computer, a server, or a network device) to execute the methods described in embodiments or some parts of embodiments of this application.

Embodiments of this specification are all described in a progressive manner, for same or similar parts in the embodiments, refer to these embodiments, and descriptions of each embodiment focus on a difference from other embodiments. In particular, for a system or system embodiment, because the system or the system embodiment is basically similar to the method embodiment, description is relatively simple. For related parts, refer to partial descriptions of the method embodiment. The foregoing described system and system embodiment are merely exemplary. The units described as separate parts may or may not be physically separate, and parts displayed as units may or may not be physical units, may be located in one place, or may be distributed on a plurality of network units. Some or all of the modules may be selected according to actual needs to achieve the objectives of the solutions of the embodiments. A person of ordinary skill in the art may understand and implement the embodiments without creative efforts.

The foregoing describes in detail a method for processing commodity comment content and an electronic device provided in this application. A specific example is used in this specification to describe a principle and an implementation of this application. The foregoing embodiments are merely used to help understand the method and the core idea of this application. In addition, a person of ordinary skill in the art may change a specific implementation and an application scope according to the idea of this application. In conclusion, content of this specification should not be construed as a limitation to this application.

## Claims

1. A method for processing commodity comment content, comprising:
analyzing, by using a commodity category as a unit, user comment content corresponding to a plurality of commodities, to determine a correspondence between a commodity category and a decision-making factor label; wherein the decision-making factor label comprises: at least one text label belonging to a focus of attention of a user in a process in which the user makes a decision about commodities of a same commodity category;
obtaining, after a target user initiates a request for filling user comment content for a target commodity object, basic comment content inputted by the target user; and
processing the basic comment content according to the decision-making factor label corresponding to a commodity category to which the target commodity belongs, to generate suggested comment text content, so as to publish user comment content for the target commodity according to the suggested comment text content.

2. The method according to claim 1, wherein
the analyzing user comment content corresponding to a plurality of commodities, to determine a correspondence between a commodity category and a decision-making factor label comprises:
performing word segmentation processing on a plurality of pieces of user comment content collected under a same commodity category, and performing semantic recognition on obtained text labels; and
determining, after a plurality of text labels are clustered according to a semantic recognition result, at least one text label belonging to the focus of attention of the user in a same commodity category, and determining the at least one text label as a decision-making factor label when the user makes a decision about the commodity category.

3. The method according to claim 1, further comprising:
determining target tone or writing style information selected by the target user; and
the processing the basic comment content according to the decision-making factor label corresponding to a commodity category to which the target commodity belongs comprises:
processing the basic comment content according to the decision-making factor label corresponding to the commodity category to which the target commodity belongs, and the target tone or writing style information, to generate suggested comment content having a target tone or writing style.

4. The method according to claim 1, wherein
the basic comment content comprises basic comment text content and basic picture/video content; and
the processing the basic comment content according to the decision-making factor label corresponding to a commodity category to which the target commodity belongs comprises:
performing model understanding processing on the basic picture/video content, to generate text expression content of the basic picture/video content; and
processing, according to the decision-making factor label corresponding to the commodity category to which the target commodity belongs, the basic comment text content and the text expression content generated based on the basic picture/video content, to generate the suggested comment text content.

5. The method according to claim 1, wherein
the basic comment content comprises basic comment text content and basic picture/video content; and
the method further comprises:
optimizing, in response to a request for optimizing the basic picture/video content, the basic picture/video content according to the commodity category to which the target commodity belongs, so as to publish optimized picture/video content.

6. A method for processing commodity comment content, comprising:
obtaining, after a target user initiates a request for filling user comment content for a target commodity object, basic comment content inputted by the target user;
submitting the basic comment content to a server end, so that the server end processes the basic comment content according to a decision-making factor label corresponding to a commodity category to which the target commodity belongs, to generate suggested comment text content; wherein the decision-making factor label is determined by analyzing user comment content of a plurality of commodities associated with the commodity category, and the decision-making factor label comprises: at least one text label belonging to a focus of attention of a user in a process in which the user makes a decision about commodities of a same commodity category; and
presenting the suggested comment text content, so as to publish user comment content for the target commodity according to the suggested comment text content.

7. A method for providing commodity information, comprising:
collecting and analyzing a plurality of pieces of user comment content corresponding to a commodity by using the commodity as a unit, to determine a decision-making factor label corresponding to the commodity; wherein the decision-making factor label comprises: at least one text label belonging to a focus of attention of a user in a process in which the user makes a decision about a same commodity; and
generating user comment summary content for a target commodity according to a decision-making factor label corresponding to the target commodity and information about a target user in a process of providing information about the target commodity to the target user, so as to provide commodity comment summary content to the target user.

8. The method according to claim 7, wherein
when user comment content is collected, a collection scope comprises a current commodity information service system, another commodity information service system, and/or a social media system; and
the method further comprises:
determining, for commodity comment content collected from different systems, whether the commodity comment content corresponds to a same commodity by analyzing images and/or text description information of corresponding commodities.

9. The method according to claim 7, further comprising:
analyzing commodity comment content published by a plurality of publishers having a same/similar feature as/to the target user for the target commodity, to determine a decision-making factor label when the user having the same/similar feature makes a decision about the commodity; and
the generating user comment summary content for a target commodity according to a decision-making factor label corresponding to the target commodity and information about a target user comprises:
generating the user comment summary content for the target commodity according to the decision-making factor label corresponding to the target commodity and the decision-making factor label when the user having the same/similar feature makes a decision about the commodity, wherein the user comment summary content comprises purchase suggestion information provided to the target user.

10. A method for providing commodity information, comprising:
obtaining user comment summary content about a target commodity in a process of providing information related to the target commodity to a target user, wherein the user comment summary content is generated according to a decision-making factor label corresponding to the target commodity and information about the target user, the decision-making factor label is determined by collecting and analyzing a plurality of pieces of user comment content corresponding to the target commodity, and the decision-making factor label comprises: at least one text label belonging to a focus of attention of a user in a process in which the user makes a decision about a same commodity; and
outputting the user comment summary content.

11. A method for processing commodity comment content, comprising:
obtaining, after a target user initiates a request for filling user comment content for a target commodity object, basic comment content inputted by the target user in response to a request for assisting in processing comment content, wherein the basic comment content comprises basic picture/video content; and
optimizing the basic picture/video content according to a category to which the target commodity belongs, so as to publish optimized picture/video content.

12. The method according to claim 11, wherein
the optimizing the basic picture/video content comprises:
performing, if the basic picture/video content comprises a plurality of pictures, model understanding on the plurality of pictures, and adjusting a sequence of the plurality of pictures according to the commodity category to which the target commodity belongs; and/or
performing subject identification on the basic picture/video content, determining subject type information of an identified subject, and optimizing the identified subject according to the commodity category to which the target commodity belongs and optimization processing rule information of each subject type corresponding to the commodity category; and/or
performing speech recognition on speech content if the basic video content comprises the speech content, converting the speech content into text content, and generating a subtitle file of the video content according to the text content, so as to add a subtitle to the basic video content; and/or
translating the text content into a plurality of languages, and separately generating subtitle files of corresponding languages, to provide subtitle information of corresponding languages to users of different language requirements in a multilingual scenario; and/or
generating an artificial intelligence (AI) face image by using an AI algorithm if the basic picture/video content comprises a face image, so as to replace an original face image in the basic picture/video content for display; and/or
removing or blurring privacy information and a background comprised in the basic picture/video content, and/or cutting a meaningless segment in the video content.

13. A computer readable storage medium, having a computer program stored thereon, the program, when executed by a processor, implementing the steps of the method according to any one of claims 1 to 12.

14. An electronic device, comprising:
one or more processors; and
a memory associated with the one or more processors, wherein the memory is configured to store program instructions, and the program instructions, when being read and executed by the one or more processors, performing the steps of the method according to any one of claims 1 to 12.
